# EUROPÄISCHE PATENTSCHRIFT

(11) **EP 2 881 309 B1**
(45) Veröffentlichungstag und Bekanntmachung des Hinweises auf die Patenterteilung: **11.10.2017**
(21) Anmeldenummer: 13195694.8
(22) Anmeldetag: 04.12.2013
(51) Int. Cl.: B62D 29/00, B62D 33/04

(54) **Seitenwand oder Dach eines Kofferaufbaus eines Nutzfahrzeugs**
Side wall or roof of a box body of a commercial vehicle
Paroi latérale ou toit d'une structure de coffre d'un véhicule utilitaire

(43) Veröffentlichungstag der Anmeldung: 10.06.2015
(73) Patentinhaber: Schmitz Cargobull AG, 48341 Altenberge (DE)
(72) Erfinder: Schlumm, Dr. Michael, 48683 Ahaus (DE); Beelmann, Reinhard, 45721 Haltern am See (DE)
(74) Vertreter: Cohausz & Florack

(56) Entgegenhaltungen:
- EP-A2- 2 025 583
- DE-A1- 3 837 890
- DE-U1- 8 817 152
- FR-A1- 2 343 914
- US-A1- 2011 285 169
- US-A1- 2013 207 415

## Beschreibung

Die Erfindung betrifft eine Seitenwand oder ein Dach eines Kofferaufbaus eines Nutzfahrzeugs, insbesondere Lastkraftwagen, Anhänger oder Sattelauflieger, mit einer Kernlage und wenigstens einer Außenhaut, wobei die Außenhaut aus mehreren an benachbarten Seiten miteinander verbundenen Paneelen gebildet wird.

Die Seitenwände und Dächer von Kofferaufbauten (US2011/0285169) von Nutzfahrzeugen bestehen typischerweise aus zwei Außenhäuten, zwischen denen eine Kernlage vorgesehen ist. Die Kernlage wird dabei meist durch einen geschäumten Kunststoff gebildet, während die Außenhäute meist durch lackierte oder mit Folie bezogene Stahlbleche gebildet werden.

Als Ausgangsmaterial für die Fertigung der Außenhäute wird zu sogenannten Coils aufgewickeltes Stahlblech verwendet. Die Breite der Coils ist dabei schmaler als die Breite der Seitenwand oder des Dachs. Aus diesem Grund werden von den Coils einzelne Blechstücke, die auch als Paneele bezeichnet werden, abgeschnitten und an ihren Rändern miteinander verbunden. Die Verbindungen der einzelnen Paneele verlaufen dabei in der Regel quer zur Längserstreckung des Kofferaufbaus.

Kofferaufbauten der genannten Art kommen insbesondere für den Gütertransport auf öffentlichen Straßen zum Einsatz. Bei entsprechenden Nutzfahrzeugen handelt es sich daher insbesondere um Lastkraftwagen, Anhänger oder Sattelauflieger. Dabei weisen Kofferaufbauten im Gegensatz zu anderen Nutzfahrzeugaufbauten wie etwa Planenaufbauten feste Seitenwände und ein festes Dach auf. Auf diese Weise wird beispielsweise das Eindringen von Feuchtigkeit in den Laderaum des Nutzfahrzeugs vermieden, weshalb die entsprechenden Kofferaufbauten für den Trockentransport, d. h. den Transport feuchtigkeitsempfindlicher Güter, verwendet werden. Aufgrund der thermischen Isolation der Kernlage werden Kofferaufbauten auch als sogenannte Kühlkoffer für den gekühlten Transport von temperaturempfindlichen Gütern verwendet.

Außenhäute, die durch Stahlbleche gebildet werden, stellen eine ausreichende mechanische Stabilität sicher, verhindern das Eindringen von Wasserdampf in die Kernlage und lassen sich einfach verarbeiten. Stahlblech weist jedoch ein hohes Gewicht und hohe Materialkosten auf. Es ist daher bereits vorgeschlagen worden, Außenhäute aus faserverstärkten Kunststoffen zu fertigen. Diese sind steif und leicht, erschweren aber den Fertigungsprozess von Seitenwänden und Dächern von Kofferaufbauten. Die faserverstärkten Kunststoffschichten müssen nämlich in einem Arbeitsschritt in den Abmessungen der Seitenwände oder des Dachs gefertigt werden, da sich die faserverstärkten Kunststoffschichten nach dem Aushärten nicht mehr ohne Weiteres zu großflächigeren Einheiten verbinden lassen. Daher stehen den Vorteilen eines geringeren Gewichts und geringerer Materialkosten entsprechender Außenhäute das Problem gegenüber, dass die Außenhäute bei der Fertigung der Seitenwände und der Dächer von Kofferaufbauten von Nutzfahrzeugen aufgrund ihrer großen Abmessungen schwierig zu handhaben sind, was den Fertigungsprozess und die Fertigungsgeschwindigkeit bei der Herstellung von Kofferaufbauten beeinträchtigt.

Daher liegt der vorliegenden Erfindung die Aufgabe zugrunde, die eingangs genannten und zuvor näher beschriebenen Seitenwände und Dächer von Kofferaufbauten von Nutzfahrzeugen derart auszugestalten und weiterzubilden, dass diese kostengünstig und einfach herzustellen sind.

Diese Aufgabe ist bei einer Seitenwand oder einem Dach nach dem Oberbegriff von Anspruch 1 dadurch gelöst, dass die Paneele eine Strukturlage mit wenigstens einer nichtmetallischen Schicht und eine Decklage mit wenigstens einer metallischen Schicht umfassen und dass sich die Decklagen der Paneele an den miteinander verbundenen Seiten weiter in Richtung der angrenzenden Paneele erstrecken als die Strukturlagen der Paneele.

Die Erfindung hat erkannt, dass die Außenhaut durch mehrere unterschiedliche Lagen zusammengesetzt werden kann, um die gewünschten Eigenschaften bereitzustellen. Dabei kommen wenigstens zwei Lagen zum Einsatz, nämlich eine Decklage und eine Strukturlage. Dies führt zwar zu einem deutlich aufwendigeren und komplizierteren Aufbau der Außenhaut, ermöglicht jedoch eine leichtere Handhabung derselben. Die Verwendung einer Decklage mit einer metallischen Schicht limitiert die durch die Strukturklage grundsätzlich zu erreichende Gewichtseinsparung. Allerdings eröffnet die Decklage eine vereinfachte Fertigung der Seitenwand oder des Dachs aus miteinander verbundenen Paneelen. Im Ergebnis werden die offensichtlichen Nachteile des komplizierteren, aufwendigeren und teureren Aufbaus der Außenhaut durch die beschriebenen Vorteile mehr als ausgeglichen.

Erfindungsgemäß ist zudem vorgesehen, dass sich die Decklagen der Paneele an den miteinander verbundenen Seiten weiter in Richtung der angrenzenden Paneele erstrecken als die Strukturlagen derselben Paneele. Dies bedeutet mit anderen Worten, dass die äußeren Kanten der miteinander verbundenen, aneinander grenzenden Paneele durch die Decklagen gebildet werden, wobei die Strukturlagen von diesen äußeren Kanten wenigstens geringfügig nach innen beabstandet sind bzw. zurückstehen. Die Decklagen stehen also gegenüber den Strukturlagen an den mit weiteren Paneelen zu verbindenden Kanten der Paneele gegenüber den Strukturlagen in Richtung der angrenzenden Paneele vor. Dies dient vorzugsweise dazu, die Paneele über die Decklagen, und zwar vorzugsweise unter Umgehung der Strukturlagen, zu verbinden.

Bei der Decklage handelt es sich vorzugsweise um eine Lage, die auf der der Kernlage abgewandten Seite der Strukturlage vorgesehen ist. Bedarfsweise können zwischen der Decklage und der Strukturlage oder daneben noch weitere Schichten oder Lagen vorgesehen sein. Unter der Strukturlage kann also eine Lage verstanden werden, die aus einer Schicht oder aus mehreren Schichten gebildet wird. Diese Schicht erstreckt sich weniger weit in Richtung der Kante des Paneels oder eines angrenzenden Paneels der Seitenwand oder des Dachs als die Decklage. Es existiert in der Außenhaut letztlich wenigstens eine nichtmetallische Schicht oder eine Läge aus mehreren Schichten, die sich zu wenigstens einer Seite nicht so weit erstreckt wie die Decklage, die eine metallische Schicht aufweist. Dabei kann bedarfsweise vorgesehen sein, dass alle nichtmetallischen Schichten des Paneels von der durch die Decklage gebildeten Kante des Paneels in Richtung der Paneelmitte beabstandet sind. Alternativ oder zusätzlich kann vorgesehen sein, dass die Decklage gegenüber wenigstens einer von der Strukturlage umfassten faserverstärkten Kunststoffschicht eines Paneels nach außen vorsteht. Die Decklage weist also vorzugsweise keine faserverstärkte Kunststoffschicht auf, da sich derartige Schichten schlechter umformen lassen als metallische Schichten. Die Decklage kann aber bedarfsweise trotzdem eine Kunststoffschicht aufweisen, und zwar etwa in Form einer Folie und/oder eines Thermoplasten. Die Strukturlage kann bedarfsweise eine metallische Schicht aufweisen, wenn sich diese nicht bis zur Kante des Paneels erstrecken muss. Es könnte aber auch eine metallische Schicht außerhalb der Decklage vorgesehen sein, die sich bedarfsweise ebenso weit wie die Decklage zum Rand des Paneels erstreckt. Vorzugsweise sind alle faserverstärkten Kunststoffschichten eines Paneels an wenigstens einem Rand gegenüber der Decklage zurückversetzt.

Bei den Paneelen einer Seitenwand und einer Decklage kann zwischen Paneelen unterschieden werden, die an zwei gegenüberliegenden Seiten mit weiteren Paneelen verbunden sind und die nur an einer Seite mit weiteren Paneelen verbunden sind. Dies ist beispielsweise der Fall, wenn sich die Paneele über die gesamte-Breite/Höhe der Seitenwand und/oder des Dachs erstrecken. Es können bei anderen Seitenwänden oder Dächern aber auch Paneele vorgesehen sein, die an drei oder vier Seiten eine gegenüber der Strukturlage nach außen überstehende Decklage aufweisen.

Bei einer ersten bevorzugten Ausgestaltung der Seitenwände oder der Dächer werden die angrenzenden Paneele über eine Falzverbindung zwischen den Decklagen der angrenzenden Paneele miteinander verbunden. Dabei bietet es sich wegen der guten Umformbarkeit der Decklage an, wenn die gegenüber den Strukturlagen überstehenden Ränder der Decklagen über die Falzverbindung miteinander verbunden werden. Falzverbindungen sind aufgrund ihres Formschlusses sehr stabil und stellen zudem sicher, dass keine Feuchtigkeit in die Seitenwand und/oder das Dach eindringen kann.

Alternativ oder zusätzlich können die angrenzenden Paneele auch über die Decklagen mittels einer einfach zu fertigenden Klebeverbindung miteinander verbunden sein. Grundsätzlich können die angrenzenden Paneele unmittelbar miteinander verklebt sein, wobei die Klebstoffschicht zwischen den Decklagen vorgesehen ist. Aufgrund der nur sehr schmalen Stoßkanten der angrenzenden Paneele ist es jedoch grundsätzlich bevorzugt, wenn die Decklagen wenigstens auch über einen Verbindungsstreifen indirekt miteinander verklebt sind. Der Verbindungsstreifen überdeckt dabei die Randbereiche der angrenzenden Paneele und wird vorzugsweise aus einem metallischen Werkstoff gebildet, der der besseren Haftung halber insbesondere dem der Decklage entsprechen kann. Alternativ oder zusätzlich können die Strukturlagen über einen Verbindungsstreifen thermisch gefügt werden, etwa durch Verschweißen, insbesondere durch Ultraschall-Schweißen. Dazu sollte, der Verbindungsstreifen aus einem, vorzugsweise thermoplastischen, Kunststoff gebildet werden oder wenigstens eine entsprechende Schicht aufweisen, die mit den Strukturlagen verschweißt werden kann. Auch die Strukturlagen sollten zu diesem Zweck eine an den Verbindungsstreifen grenzende Schicht umfassend einen, insbesondere thermoplastischen, Kunststoff aufweisen. Grundsätzlich kann natürlich auch das Verkleben der Strukturlagen über ein Verbindungselement, etwa in Form eines Verbindungsstreifens, zu bevorzugten Ergebnissen führen. Entsprechende Verbindungen schaffen eine feuchtigkeitsdichte Außenhaut und können zudem hohe Kräfte aufnehmen, die eine dauerhaft stabile Außenhaut gewährleisten.

Da die Decklage nur einen Teil der Schichtdicke der Außenhaut bildet, kann es zur einfacheren und dauerhafteren Verbindung der Decklage zweckmäßig sein, wenn diese beim Verbinden oder vor dem Verbinden nach innen, d. h. in Richtung der, gegebenenfalls erst später vorzusehenden, Kernlage umgebogen sind. So steht entweder mehr Material oder eine größere Verbindungsfläche für die Verbindung der Decklagen untereinander zur Verfügung. Dabei kann die Decklage bedarfsweise um den in Richtung des angrenzenden Paneels weisenden Rand der Strukturlage L-förmig nach innen umgebogen sein.

Insbesondere im Zusammenhang mit Falzverbindungen bietet es sich an, wenn die Decklagen an den miteinander zu verbindenden Seiten der Decklagen jeweils aufeinander umgebogen sind. Die Decklage wird in diesem Zusammenhang also vorzugsweise im Wesentlichen U-förmig umgebogen. Auf diese Weise kann im Bereich der gegenüber der Strukturlage in Richtung des angrenzenden Paneels überstehenden Decklage eine höhere Festigkeit erreicht werden, welche der höheren Festigkeit der mit dem angrenzenden Paneel zu schließenden Verbindung dienen kann. Werden die Decklagen beispielsweise über Falzverbindungen miteinander verbunden, können Verbindungen erhalten werden, die deutlich höheren Kräften widerstehen.

Alternativ oder zusätzlich können die Decklagen an den miteinander verbundenen Seiten der Paneele auch U-förmig um den Rand der Strukturlagen und bedarfsweise weiterer Schichten oder Lagen nach innen umgebogen sein. Die Decklagen können in diesem Fall die in Richtung der gegenüberliegenden Paneele weisenden Stoßkanten bilden. Der Rand der Decklage kann auf der Innenseite der Strukturlage parallel zur Ebene des Paneels ausgerichtet sein. Der Rand der Decklage kann dann zweckmäßig zur Verbindung angrenzender Paneele, etwa über eine Klebeverbindung, genutzt werden. Es kann aber auch ein an den Rand der Decklage angrenzender, von der Stoßkante weiter beabstandeter Bereich der Strukturlage über ein Verbindungselement, etwa in Form eines Verbindungsstreifens, verklebt oder verschweißt werden, wie dies grundsätzlich bereits beschrieben worden ist.

Weiter bevorzugt ist die innere Seite der Außenhaut im Bereich der umgebogenen Enden bzw. Rändern der Decklagen im Wesentlichen bündig mit der Strukturlage vorgesehen. Sofern eine weitere Schicht auf der Innenseite der Strukturlage vorgesehen ist, die die Innenseite der Außenhaut bildet, kann die umgebogene Decklage auch bündig mit dieser die Innenseite der Außenhaut bildenden Schicht ausgebildet sein.

Zur Verbesserung der mechanischen Eigenschaften der Außenhaut ist es bevorzugt, wenn die Strukturlage wenigstens eine faserverstärkte, insbesondere glasfaserverstärkte, Kunststoffschicht aufweist. Weiter bevorzugt kann es sein, wenn mehrere faserverstärkte Kunststoffschichten vorgesehen sind, die sich hinsichtlich ihrer mechanischen Eigenschaften ergänzen können.

Zur Verringerung der Materialkosten und der einfacheren Handhabung bei der Herstellung von Kofferaufbauten bietet es sich an, wenn die Matrix der wenigstens einen faserverstärkten Kunststoffschicht von einem Thermoplasten gebildet wird. Dabei bietet es sich aus Kostengesichtspunkten und aufgrund der Verarbeitbarkeit insbesondere an, wenn der Thermoplast ein Polyolefin, insbesondere Polypropylen, ist.

Bei der Verwendung von faserverstärkten Kunststoffschichten zur Bildung der Strukturlage kann es sich anbieten, wenn die Fasern von wenigstens zwei faserverstärkten Kunststoffschichten jeweils eine Vorzugsrichtung der Fasern aufweisen. Durch die Verwendung von wenigstens zwei faserverstärkten Kunststoffschichten mit vorzugsweise unterschiedlichen, insbesondere wenigstens etwa senkrecht zueinander ausgerichteten, Vorzugsrichtungen der Fasern kann gegebenenfalls eine höhere Festigkeit und/oder Steifigkeit der Strukturlage erzielt werden. Um ein Verziehen der Außenhaut einer Seitenwand oder eines Dachs zu vermeiden, kann es zweckmäßig sein, wenn die Fasern von wenigstens drei faserverstärkten Kunststoffschichten eine Vorzugsrichtung aufweisen und diese Vorzugsrichtungen, vorzugsweise senkrecht, zueinander ausgerichtet sind. Es können dabei vorzugsweise die Vorzugsrichtungen der Fasern von zwei faserverstärkten Kunststoffschichten im Wesentlichen identisch sein und sich von der Vorzugsrichtung der dazwischen befindlichen faserverstärkten Kunststoffschicht unterscheiden. Vorzugsweise ist die Vorzugsrichtung der mittleren Schicht wenigstens etwa senkrecht zu den wenigstens etwa parallelen Vorzugsrichtungen der äußeren Schichten. Im Falle von mehr als zwei faserverstärkten Kunststoffschichten können die faserverstärkten Kunststoffschichten mit senkrecht zueinander ausgerichteten Vorzugsrichtungen vorzugsweise aneinander angrenzen, um so unnötige Spannungen im Material zu vermeiden. Besonders gute Ergebnisse wurden erreicht, wenn drei faserverstärkte Kunststoffschichten vorgesehen sind und jede faserverstärkte Kunststoffschicht eine Vorzugsrichtung aufweist, die senkrecht zur Vorzugsrichtung einer angrenzenden faserverstärkten Kunststoffschicht ausgerichtet ist. In diesem Falle von wenigstens zwei unterschiedlichen Vorzugsrichtungen von wenigstens zwei faserverstärkten Kunststoffschichten weisen die Vorzugsrichtungen vorzugsweise sowohl in Längsrichtung als auch in Querrichtung zur Seitenwand und/oder des Dachs. Ist bei einer Mehrzahl von, beispielsweise drei, faserverstärkten Kunststoffschichten, eine Vorzugsrichtung öfter vertreten als eine andere Vorzugsrichtung, erstreckt sich diese öfter vorgesehene Vorzugsrichtung in Querrichtung der Seitenwand oder des Dachs. Dadurch wird eine höhere Steifigkeit in der Querrichtung erreicht, was einer Durchbiegung der Seitenwand oder des Dachs entgegenwirkt.

Zur Verringerung des Gewichts der Außenhaut und zur einfachen Verbindung von Paneelen untereinander bietet es sich an, wenn die metallische Schicht der Decklage aus Aluminium gebildet wird.

Alternativ oder zusätzlich kann die Decklage auf ihrer Außenseite, d. h. der von der Kernlage abgewandten Seite, noch wenigstens eine Lackschicht und/oder wenigstens eine Kunststoffschicht tragen, die für eine optisch ansprechende und/oder hygienisch einwandfreie Außenseite sorgt.

Zur Verbesserung der Anbindung von der Außenhaut an die Kernlage kann zwischen der Kernlage und der Strukturlage eine Zwischenlage vorgesehen sein, die an ihrer an die Kernlage grenzenden Seite affin zum angrenzenden Material der Kernlage ist und die an ihrer an die Strukturlage grenzenden Seite affin zum angrenzenden Material der Strukturlage ist. Auf diese Weise werden hohe Haftkräfte einerseits zwischen der Kernlage und der Zwischenlage und andererseits zwischen der Zwischenlage und der Strukturlage erreicht, die größer sind, als die direkt zwischen der Kernlage und der Strukturlage zu erzielenden Haftkräfte.

Unter einer Affinität im Sinne der Erfindung zwischen einer Seite der Zwischenlage und der Kernlage bzw. der Strukturlage wird verstanden, dass die Kernlage bzw. die Strukturlage über die jeweilige Seite in besonders bevorzugter Weise mit der Zwischenlage verbunden werden kann. Dabei kann die Affinität einer der beiden Seiten der Zwischenlage sich von der Affinität der Zwischenlage als solche unterscheiden. Die wenigstens eine Seite kann also in entsprechender Weise ausgebildet oder vorbehandelt sein, dass die gewünschte Affinität bereitgestellt wird. Vor diesem Hintergrund ist es weiter bevorzugt, wenn die eine Seite der Zwischenlage eine höhere Affinität zur Strukturlage und die gegenüberliegende Seite der Zwischenlage eine höhere Affinität zur Kernlage hat als die jeweils gegenüberliegende Seite der Zwischenlage.

Bedarfsweise kann die Zwischenlage so gewählt sein, dass diese bereits ohne besondere Ausgestaltung oder Vorbehandlung eine höhere Affinität zur Strukturlage als die Kernlage und/oder eine höhere Affinität zur Kernlage als die Strukturlage aufweist. Auf diese Weise können Strukturlagen und Kernlagen miteinander verbunden werden, die eine sehr geringe Affinität zueinander aufweisen. Besonders effektiv ist es in diesem Zusammenhang, wenn wenigstens eine Seite der Zwischenlage derart ausgebildet oder vorbehandelt ist, dass die gewünschte Affinität erreicht wird, die sich von der Affinität der gegenüberliegenden Seite der Zwischenlage unterscheidet. Somit können im Grenzbereich zwischen der Zwischenlage und der Kernlage einerseits sowie zwischen der Zwischenlage und der Strukturlage andererseits hohe Bindungskräfte erreicht werden.

Dabei sind grundsätzlich solche Oberflächen zueinander affin, die die Ausbildung hoher Adhäsionskräfte, insbesondere eine stoffschlüssige Verbindung, wie etwa ein Anhaften, ermöglichen.

In diesem Zusammenhang ist es besonders bevorzugt, wenn die Kernlage mit der Zwischenlage, die Zwischenlage mit der Strukturlage und/oder die Strukturlage mit der Decklage vorzugsweise über eine Haftvermittlerschicht stoffschlüssig verbunden sind. Auf diese Weise lässt sich die Außenhaut der Seitenwand oder des Dachs von Kofferaufbauten eines Nutzfahrzeugs einfach herstellen und sicherstellen, dass sich die einzelnen Schichten auch über lange Zeit nicht versehentlich voneinander trennen.

Hinsichtlich der Zwischenlage hat es sich als besonders effektiv erwiesen, wenn diese eine Kunststoffschicht, eine metallische Schicht oder eine Metall aufweisende Kunststoffschicht ist. Insbesondere haben sich metallische Schichten aus Aluminium als günstig erwiesen. Durch entsprechende Schichten kann dafür Sorge getragen werden, dass die Zwischenlagen eine Barriereeigenschaft gegenüber der Diffusion von Gasen und/oder Dämpfen, wie insbesondere Wasserdampf, aufweist. Auf diese Weise kann beispielswiese ein Eintrag von Feuchtigkeit in die Kernlage vermieden werden.

Die Erfindung wird nachfolgend anhand einer lediglich Ausführungsbeispiele darstellenden Zeichnung näher erläutert. In der Zeichnung zeigt
- Fig. 1: einen Kofferaufbau eines Sattelaufliegers mit erfindungsgemäßen Seitenwänden und einem erfindungsgemäßen Dach in einer perspektivischen Ansicht,
- Fig. 2: ein Detail einer Seitenwand des Kofferaufbaus aus Fig. 1 in einem Querschnitt,
- Fig. 3: ein erstes Paneel zur Herstellung einer erfindungsgemäßen Seitenwand oder eines erfindungsgemäßen Dachs in einer Seitenansicht,
- Fig. 4: zwei über eine Falzverbindung miteinander verbundene Paneele einer erfindungsgemäßen Seitenwand oder eines erfindungsgemäßen Dachs in einer Schnittansicht,
- Fig. 5: ein zweites Paneel zur Herstellung einer erfindungsgemäßen Seitenwand oder eines erfindungsgemäßen Dachs in einer Seitenansicht,
- Fig. 6: ein drittes Paneel zur Bildung einer erfindungsgemäßen Seitenwand oder eines erfindungsgemäßen Dachs in einer Seitenansicht,
- Fig. 7: ein viertes Paneel zur Bildung einer erfindungsgemäßen Seitenwand oder eines erfindungsgemäßen Dachs in einer Seitenansicht,
- Fig. 8: zwei über eine Klebeverbindung miteinander verbundene Paneele zur Bildung einer erfindungsgemäßen Seitenwand oder eines erfindungsgemäßen Dachs in einer Seitenansicht und
- Fig. 9: zwei über eine Schweißverbindung miteinander verbundene Paneele zur Bildung einer erfindungsgemäßen Seitenwand oder eines erfindungsgemäßen Dachs in einer Seitenansicht.

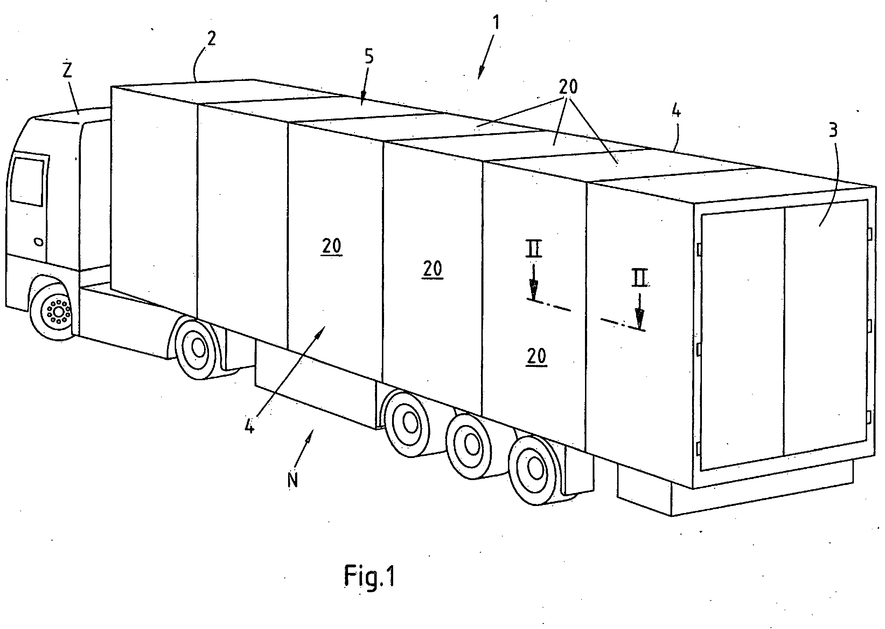

In der Fig. 1 ist ein Nutzfahrzeug N in Form eines Sattelaufliegers dargestellt, das von einer Zugmaschine Z gezogen wird. Das Nutzfahrzeug N trägt einen Kofferaufbau 1 umfassend eine Stirnwand 2, eine Rückwand 3, zwei Seitenwände 4 und ein Dach 5. Der Kofferaufbau 1 bildet in seinem Inneren einen Laderaum zum Transport von Gütern, die insbesondere feuchtigkeits- und/oder temperaturempfindlich sein können.

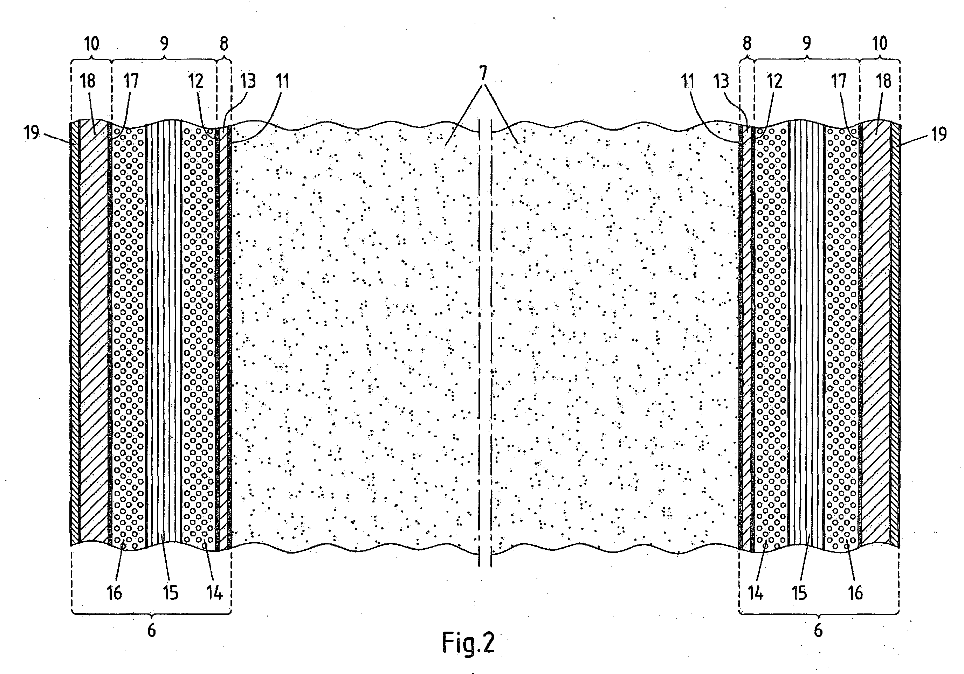

In der Fig. 2 ist ein Quereschnitt einer Seitenwand 4 des in Fig. 1 dargestellten Kofferaufbaus 1 dargestellt. Der Aufbau der Seitenwand 4 entspricht dabei dem Aufbau der weiteren Seitenwand 4 und des Dachs 5. Die Seitenwände 4 und das Dach 5 weisen folglich jeweils zwei formstabile Außenhäute 6 und eine dazwischen angeordnete Kernlage 7 auf. Beim dargestellten und insoweit bevorzugten Kofferaufbau 1 wird die Kernlage 7 durch einen geschäumten Kunststoff, insbesondere Polyurethan, gebildet. Zudem sind beim dargestellten und insoweit bevorzugten Kofferaufbau 1 die Außenhäute 6 der Seitenwände 4 und des Dachs 5 jeweils gleichartig ausgebildet. Es ergib sich somit vorliegend ein im Wesentlichen symmetrischer Aufbau der Seitenwände 4 und des Dachs 5. Dabei weist eine der Außenhäute 6 in Richtung des Laderaums des Kofferaufbaus 1, während die andere Außenhaut 6 die Grenze zur Umgebung des Kofferaufbaus 1 bildet.

Die Außenhäute 6 sowohl der Seitenwände 4 als auch des Daches 5 weisen jeweils eine Zwischenlage 8, eine Strukturlage 9 und eine Decklage 10 auf, wobei die Decklage 10 auf der der Kernlage 7 abgewandten Seite der Strukturlage 9 und die Zwischenlage 8 auf der der Kernlage 7 zugewandten Seite der Strukturlage 9 vorgesehen ist. Die Zwischenlage 8 weist auf der an die Kernlage 7 angrenzenden Seite eine mit dem Material der Kernlage 7 affine Haftvermittlerschicht 11 auf. Auf der gegenüberliegenden Seite grenzt die Zwischenlage 8 an die Strukturlage 9 und weist dort eine mit dem angrenzenden Material der Strukturlage 9 affine Haftvermittlerschicht 12 auf. Die Haftvermittlerschichten 11,12 werden bei der dargestellten und insoweit bevorzugten Seitenwand aus einer metallischen Schicht 13 in Form einer Aluminiumfolie getragen. Da die Zwischenlage 8 im Wesentlichen der Anbindung der Kernlage 7 an die Strukturlage 9 dient, ist es ausreichend, wenn die Dicke der metallischen Schicht 13 zwischen 30 µm und 150 µm, insbesondere zwischen 50 µm und 100 µm, beträgt. Eine entsprechende Dicke ist auch ausreichend, um eine im Wesentlichen gas- und/oder dampfdichte Barriereschicht bereitzustellen.

Die Strukturlagen 9 der Außenhäute 6 setzen sich jeweils aus drei Schichten 14,15,16 von faserverstärkten Kunststoffen zusammen. Deren Dicke beträgt jeweils zwischen 100 µm und 500 µm, insbesondere zwischen 200 µm und 400 µm. Die Fasern jeder Schicht 14,15,16 sind in eine Vorzugsrichtung ausgerichtet. Beim dargestellten und insoweit bevorzugten Kofferaufbau 1 bilden die Fasern jeder Schicht 14,15,16 faserverstärkten Kunststoffs zudem ein Gelege. Beim dargestellten und insoweit bevorzugten Kofferaufbau 1 ist die Vorzugsrichtung der Fasern der mittleren faserverstärkten Kunststoffschicht 15 jeder Strukturlage 9 senkrecht zu den Vorzugsrichtungen der zu beiden Seiten angrenzenden weiteren faserverstärkten Kunststoffschichten 14,16. Zudem ist die Strukturschicht 9 über eine Haftvermittlerschicht 17 mit der Decklage 10 stoffschlüssig verbunden, wobei die Decklage 10 eine metallische Schicht 18 in Form eines Aluminiumblechs umfasst, auf dessen Außenseite eine Decklackschicht 19 angebracht ist. Die Dicke der metallischen Schicht 18 beträgt zwischen 100 µm und 400 µm, insbesondere 200 µm und 300 µm.

Bei dem in der Fig. 1 dargestellten Kofferaufbau werden die Außenhäute 6 jeweils der Seitenwände 4 und des Dachs 5 aus an ihren benachbarten Seiten miteinander verbundenen Paneelen 20 gebildet. Die Verbindungen zwischen den Paneelen 20 verlaufen dabei quer zur Längserstreckung des Kofferaufbaus 1.

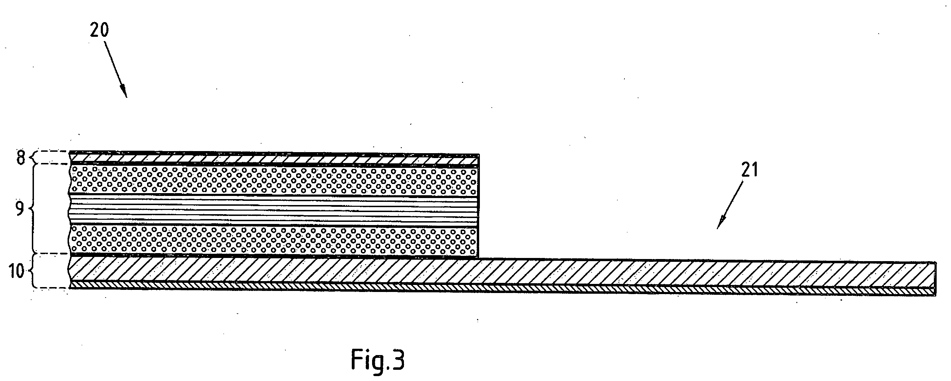

Der mit einem weiteren, vorzugsweise gleichartigen, Paneel 20 zu verbindende Randbereich eines solchen Paneels 20 ist in der Fig. 3 im noch unverbundenen Zustand dargestellt. In diesem Randbereich steht die Decklage 10 gegenüber der Strukturlage 9 und der Zwischenlage 8 nach außen, d.h. in Richtung des im verbundenen Zustand angrenzenden Paneels 20 vor. Dieser Überstand, also der gegenüber der Strukturlage überstehende Teil 21 der Decklage 10, ermöglicht das Verbinden des Paneels 20 mit einem angrenzenden Paneel 20 über die beiden Decklagen 10 und beträgt beim dargestellten und insoweit bevorzugten Paneel 20 zwischen 5 mm und 20 mm, vorzugsweise zwischen 7 mm und 12 mm.

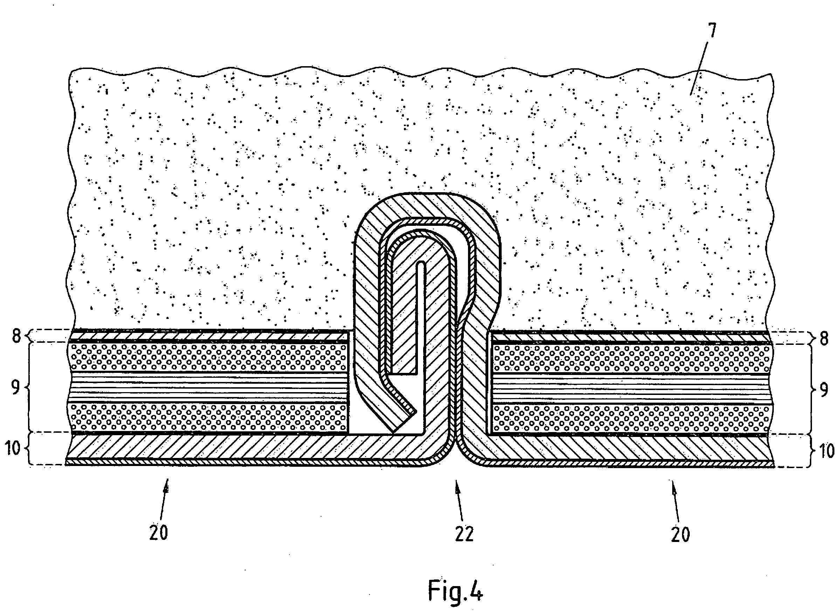

In der Fig. 4 ist ein Detail einer Seitenwand 4 umfassend eine Kernlage 7 sowie zwei Paneele 20 gemäß Fig. 3 dargestellt, die über ihre Decklagen 10 mittels einer Falzverbindung 22 miteinander verbunden worden sind. Zur Bildung der Falzverbindung 22 wird der randseitig überstehende Teil 21 der linken Decklage 10 L-förmig nach innen in Richtung der Kernlage 7 umgebogen, wobei das Ende des nach innen umgebogene Rands zusätzlich U-förmig umgebogen wird. Der gegenüber der Strukturlage überstehende Teil 21 der rechten Decklage 10 wird U-förmig umgebogen und umgreift so den umgebogenen Teil der linken Decklage 10. Die beiden gegenüber der Strukturlage 9 überstehenden Teile 19 der Decklagen 10 werden miteinander verpresst. Damit die Falzverbindung 22 dauerhaft dicht ist, kann zwischen die beiden Decklagen 10 ein sogenanntes Dichtband eingebracht werden. Die Kernlage 7 ist zwischen die mittels Falzverbindungen 22 gebildeten Außenhäute 6 eingebracht und dort ausgehärtet worden. Somit ist die Kernlage 7 an die angrenzende Haftvermittlerschicht 11 der Zwischenlage 8 angeschäumt worden, was die stoffschlüssige Verbindung zwischen den Außenhäuten 6 und der Kernlage 7 verbessert.

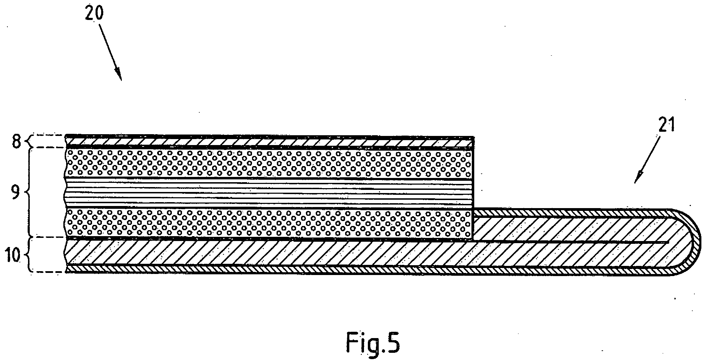

In der Fig. 5 ist das Paneel 20 gemäß Fig. 3 dargestellt, bei dem jedoch der gegenüber der Strukturlage 9 und der Zwischenlage 8 nach außen überstehende Teil 21 der Decklage 10 zur Hälfte nach innen umgebogen ist. Der großen Ähnlichkeit und der besseren Verständlichkeit halber werden für die einzelnen Bauteile vorliegend die gleichen Bezugszeichen verwendet, auch wenn die Bauteile der einzelnen Ausführungsbeispiele nicht völlig identisch sein müssen. Der umgebogene Teil der Decklage 10 liegt von innen am übrigen, gegenüber der Strukturlage überstehenden Teil 21 der Decklage 10 an und schließt auf seiner Innenseite im Wesentlichen bündig mit der Strukturlage 9 ab. Das entsprechende Paneel 20 kann ebenfalls über eine Falzverbindung 21 oder über eine Klebeverbindung mit einem gleichartigen Paneel verbunden werden.

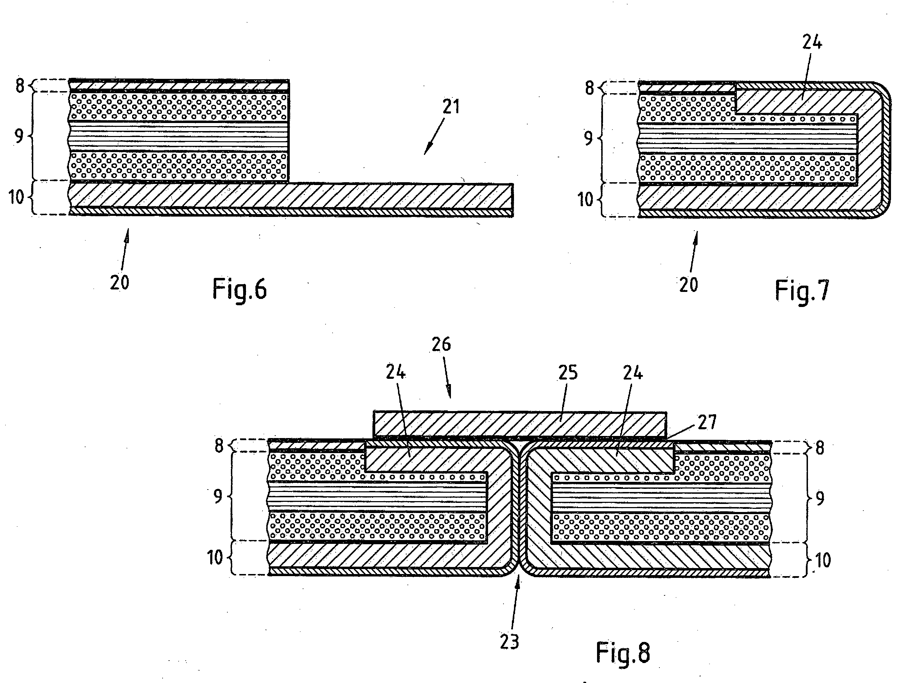

In der Fig. 6 ist ein Randbereich eines Paneels 20 dargestellt, dessen Aufbau dem Paneel 20 gemäß Fig. 3 entspricht. Lediglich die Decklage 10 steht weniger weit gegenüber der Strukturlage 9 nach außen vor. Aus dem Paneel 20 gemäß Fig. 6 kann das Paneel 20 gemäß Fig. 7 gebildet werden. Die Decklage 10 des Paneels 20 wird dabei U-förmig gegenüber der Strukturlage 9 und der Zwischenlage 8 nach innen in Richtung der noch zu bildenden Kernlage 7 umgebogen. Der U-förmig umgebogene Rand 24 der Decklage 10 umgreift den dortigen Rand der Strukturlage 9 und schließt auf der der später vorzusehenden Kernlage 7 zugewandten Seite bündig mit der Zwischenlage 8 ab.

In der Fig. 8 sind zwei Paneele 20 gemäß Fig. 7 dargestellt, wobei die beiden Paneele 20 mit den äußeren, durch die Decklage gebildeten stumpfen Stoßkanten 23 aneinander stoßen. Die U-förmig nach innen umgebogenen Ränder 24 der Decklagen 10 sind zudem über einen separaten Streifen 25, vorzugsweise aus Aluminiumblech, über eine Klebeverbindung 26 miteinander verklebt. Dazu wird zwischen den Streifen 25 aus Aluminiumblech und den U-förmig nach innen umgebogenen Rändern 24 der Decklagen 10 eine Klebstoffschicht 27 vorgesehen. Alternativ oder zusätzlich kann auch zwischen den stumpfen Stoßkanten 23 der U-förmig umgebogenen Decklagen 10 noch eine Klebstoffschicht 27 vorgesehen sein, um das Eindringen von Feuchtigkeit oder Schmutz zu vermeiden.

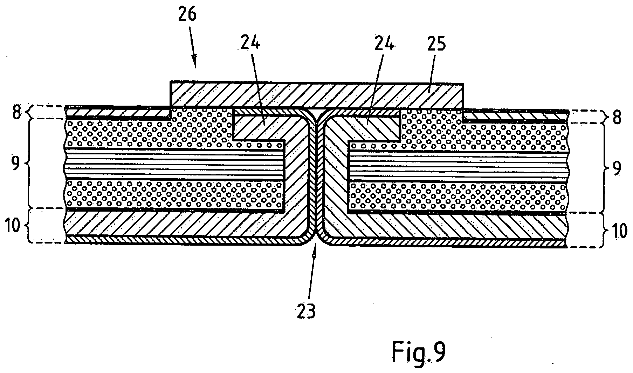

In der Fig. 9 sind zwei Paneele 20 dargestellt, die sich von den Paneelen 20 gemäß Fig. 7 darin unterscheiden, dass sich die U-förmig nach innen umgebogenen Ränder 24 der Decklagen 20 nicht bis an die Zwischenlage 8 heran erstrecken. Im Randbereich der Paneele 20 bilden dagegen die Strukturlagen 9 einen Teil der Innenseite der Außenhaut 6. Diese Teile der Strukturlagen 9 sind mit einem Verbindungsstreifen 25 verschweißt, der ebenso wie die Strukturlagen 9 einen thermoplastischen Kunststoff aufweist und bilden so eine Verbindung 26 zwischen den angrenzenden Paneelen 20. Das Verschweißen des die angrenzenden Ränder der Paneele 20 überdeckenden Verbindungsstreifens 25 mit den Strukturlagen 9 der Paneele erfolgt vorzugsweise durch Ultraschall-Schweißen. Zudem kann der Verbindungsstreifen 25 mit den U-förmig nach innen umgebogenen Rändern 24 der Decklagen 10 verklebt sein. Erforderlich ist dies jedoch nicht unbedingt.

Hinsichtlich der zuvor verwendeten Begriffe "Lage" und "Schicht" wird darauf hingewiesen, dass eine "Lage" vorzugsweise ein separat bereitstellbares, herstellbares und/oder handhabbares Element des Paneels sein kann, während eine "Schicht" vorzugsweise nicht separat, sondern lediglich gemeinsam mit wenigstens einer weiteren Schicht als Lage gehandhabt und zur Herstellung des Paneels eingesetzt wird.

## Patentansprüche

1. Seitenwand (4) oder Dach (5) eines Kofferaufbaus (1) eines Nutzfahrzeugs (N), insbesondere Lastkraftwagens, Anhängers oder Sattelaufliegers, mit einer Kernlage (7) und wenigstens einer Außenhaut (6), wobei die Außenhaut (6) aus mehreren an benachbarten Seiten miteinander verbundenen Paneelen (20) gebildet wird,
**dadurch gekennzeichnet, dass**
die Paneele (20) eine Strukturlage (9) mit wenigstens einer nichtmetallischen Schicht und eine Decklage (10) mit wenigstens einer metallischen Schicht (18) umfassen und dass sich die Decklagen (10) der Paneele (20) an den miteinander verbundenen Seiten weiter in Richtung der angrenzenden Paneele (20) erstrecken als die Strukturlagen (9) der Paneele (20).

2. Seitenwand oder Dach nach Anspruch 1,
**dadurch gekennzeichnet, dass**
die angrenzenden Paneele (20) über eine Falzverbindung (22) zwischen den Decklagen (10) der angrenzenden Paneele (20) miteinander verbundenen sind.

3. Seitenwand oder Dach nach Anspruch 1 oder 2,
**dadurch gekennzeichnet, dass**
die angrenzenden Paneele (20) über die Decklagen (10) mittels einer Klebeverbindung (26) miteinander verbundenen sind.

4. Seitenwand oder Dach nach einem der Ansprüche 1 bis 3,
**dadurch gekennzeichnet, dass**
die Decklagen (10) an den miteinander verbundenen Seiten der Paneele (20) nach innen umgebogen sind.

5. Seitenwand oder Dach nach Anspruch 4,
**dadurch gekennzeichnet, dass**
die Decklagen (10) an den miteinander verbundenen Seiten der Paneele (20) jeweils aufeinander umgebogen sind.

6. Seitenwand oder Dach nach Anspruch 4 oder 5,
**dadurch gekennzeichnet, dass**
die Decklagen (10) an den miteinander verbundenen Seiten der Paneele (20) um den Rand der Strukturlagen (9) nach innen umgebogen sind.

7. Seitenwand oder Dach nach einem der Ansprüche 4 bis 6,
**dadurch gekennzeichnet, dass**
die nach innen umgebogenen Ränder (24) der Decklagen (10) in Richtung der Kernlage (7) im Wesentlichen bündig mit der Strukturlage (9) abschließen.

8. Seitenwand oder Dach nach einem der Ansprüche 1 bis 7,
**dadurch gekennzeichnet, dass**
die Strukturlage (9) wenigstens eine faserverstärkte Kunststoffschicht (14,15,16), vorzugsweise mehrere faserverstärkte Kunststoffschichten (14,15,16), aufweist.

9. Seitenwand oder Dach nach Anspruch 8,
**dadurch gekennzeichnet, dass**
die Matrix wenigstens einer faserverstärkten Kunststoffschicht (14,15,16) aus einem Thermoplasten, insbesondere aus Polypropylen gebildet wird.

10. Seitenwand oder Dach nach Anspruch 8 oder 9,
**dadurch gekennzeichnet, dass**
die Fasern von wenigstens zwei faserverstärkten Kunststoffschichten (14,15,16) eine Vorzugsrichtung aufweisen und dass die Vorzugsrichtungen senkrecht zueinander ausgerichtet sind.

11. Seitenwand oder Dach nach einem der Ansprüche 1 bis 10,
**dadurch gekennzeichnet, dass**
die metallische Schicht (18) der Decklage (10) aus Aluminium gefertigt ist und/oder die Decklagen (10) auf ihren Außenseiten jeweils wenigstens eine Lackschicht (19) und/oder wenigstens eine Kunststoffschicht tragen.

12. Seitenwand oder Dach nach einem der Ansprüche 1 bis 11,
**dadurch gekennzeichnet, dass** die Paneele (20) über Verbindungen zwischen den Strukturlagen (9) und/oder den Decklagen (10) der Paneele (20) sowie einem die Ränder der verbundenen Paneele überdeckenden Verbindungselement, vorzugsweise in Form eines Verbindungsstreifens (25) miteinander verbunden sind und dass, vorzugsweise, die Verbindungen Klebeverbindungen und/oder Schweißverbindungen sind.

13. Seitenwand oder Dach nach einem der Ansprüche 1 bis 12,
**dadurch gekennzeichnet, dass**
zwischen der Kernlage (7) und der Strukturlage (9) eine Zwischenlage (8) vorgesehen ist, dass die an die Kernlage (7) grenzende Seite der Zwischenlage (8) affin zum angrenzenden Material der Kernlage (7) ist und dass die an die Strukturlage (9) grenzende Seite der Zwischenlage (8) affin zum angrenzenden Material der Strukturlage (9) ist.

14. Seitenwand oder Dach nach Anspruch 13,
**dadurch gekennzeichnet, dass**
die Kernlage (7) mit der Zwischenlage (8), die Zwischenlage (8) mit der Strukturlage (9) und/oder die Strukturlage (9) mit der Decklage (10), vorzugsweise über eine Haftvermittlerschicht (11,12,17), stoffschlüssig verbunden ist.

15. Seitenwand oder Dach nach Anspruch 13 oder 14,
**dadurch gekennzeichnet, dass**
die Zwischenlage (8) eine Kunststoffschicht, eine Metall aufweisende Kunststoffschicht und/oder metallische Schicht (13), vorzugsweise aus Aluminium, aufweist.

## Claims

1. Side wall (4) or roof (5) of a box body (1) of a commercial vehicle (N), in particular a lorry, trailer or semitrailer, having a core layer (7) and at least one outer skin (6), wherein the outer skin (6) is formed from a plurality of panels (20) which are connected to each other at adjacent sides, **characterised in that** the panels (20) comprise a structural layer (9) having at least one non-metal layer and a covering layer (10) having at least one metal layer (18) and **in that** the covering layers (10) of the panels (20) at the sides which are connected to each other extend further in the direction of the adjacent panels (20) than the structural layers (9) of the panels (20).

2. Side wall or roof according to claim 1, **characterised in that** the adjacent panels (20) are connected to each other by means of a folded connection (22) between the covering layers (10) of the adjacent panels (20).

3. Side wall or roof according to claim 1 or claim 2, **characterised in that** the adjacent panels (20) are connected to each other via the covering layers (10) by means of an adhesive connection (26).

4. Side wall or roof according to any one of claims 1 to 3, **characterised in that** the covering layers (10) are bent inwards at the sides of the panels (20) which are connected to each other.

5. Side wall or roof according to claim 4, **characterised in that** the covering layers (10) are bent one over the other in each case at the sides of the panels (20) which are connected to each other.

6. Side wall or roof according to claim 4 or 5, **characterised in that** the covering layers (10) at the sides of the panels (20) which are connected to each other are bent inwards around the edge of the structural layers (9).

7. Side wall or roof according to any one of claims 4 to 6, **characterised in that** the inwardly bent edges (24) of the covering layers (10) terminate in the direction of the core layer (7) substantially flush with the structural layer (9).

8. Side wall or roof according to any one of claims 1 to 7, **characterised in that** the structural layer (9) has at least one fibre-reinforced plastics material layer (14, 15, 16), preferably a plurality of fibre-reinforced plastics material layers (14, 15, 16).

9. Side wall or roof according to claim 8, **characterised in that** the matrix of at least one fibre-reinforced plastics material layer (14, 15, 16) is formed from a thermoplastic, in particular from polypropylene.

10. Side wall or roof according to claim 8 or 9, **characterised in that** the fibres of at least two fibre-reinforced plastics material layers (14, 15, 16) have a preferred direction and **in that** the preferred directions are orientated perpendicularly relative to each other.

11. Side wall or roof according to any one of claims 1 to 10, **characterised in that** the metal layer (18) of the covering layer (10) is produced from aluminium and/or the covering layers (10) carry at the outer sides thereof at least one paint layer (19) and/or at least one plastics material layer.

12. Side wall or roof according to any one of claims 1 to 11, **characterised in that** the panels (20) are connected to each other by means of connections between the structural layers (9) and/or the covering layers (10) of the panels (20) as well as via a connection element which covers the edges of the connected panels, preferably in the form of a connection strip (25), and **in that** the connections are preferably adhesive connections and/or weld connections.

13. Side wall or roof according to any one of claims 1 to 12, **characterised in that** between the core layer (7) and the structural layer (9) an intermediate layer (8) is provided, **in that** the side of the intermediate layer (8) adjacent to the core layer (7) is affine to the adjacent material of the core layer (7) and **in that** the side of the intermediate layer (8) adjacent to the structural layer (9) is affine to the adjacent material of the structural layer (9).

14. Side wall or roof according to claim 13, **characterised in that** the core layer (7) is connected in a materially engaging manner to the intermediate layer (8), the intermediate layer (8) is connected in a materially engaging manner to the structural layer (9) and/or the structural layer (9) is connected in a materially engaging manner to the covering layer (10), preferably by means of an adhesion promoting layer (11, 12, 17).

15. Side wall or roof according to claim 13 or 14, **characterised in that** the intermediate layer (8) has a plastics material layer, a plastics material layer which has metal and/or a metal layer (13), preferably of aluminium.

## Revendications

1. Paroi latérale (4) ou toit (5) d'une structure de coffre (1) d'un véhicule utilitaire (N), en particulier d'un camion, d'une remorque ou d'un semi-remorque, comprenant une âme centrale (7) et au moins une peau extérieure (6), la peau extérieure (6) étant formée par plusieurs panneaux (20) reliés les uns aux autres sur des côtés adjacents **caractérisée en ce que**
les panneaux (20) comprennent une couche de structure (9) avec au moins une couche non métallique et une couche de finition (10) avec au moins une couche métallique (18) et que les couches de finition (10) des panneaux (20) s'étendent plus loin sur les côtés reliés les uns aux autres dans la direction des panneaux adjacents (20) que les couches de structure (9) des panneaux (20).

2. Paroi latérale ou toit selon la revendication 1,
**caractérisée en ce que**
les panneaux adjacents (20) sont reliés les uns aux autres par un assemblage par agrafage (22) entre les couches de finition (10) des panneaux adjacents (20).

3. Paroi latérale ou toit selon la revendication 1 ou 2,
**caractérisée en ce que**
les panneaux adjacents (20) sont reliés les uns aux autres par l'intermédiaire de couches de finition (10) à l'aide d'une liaison adhésive (26).

4. Paroi latérale ou toit selon une des revendications de 1 à 3,
**caractérisée en ce que**
les couches de finition (10) sont repliées vers l'intérieur sur les côtés des panneaux (20) reliés les uns aux autres.

5. Paroi latérale ou toit selon la revendication 4,
**caractérisée en ce que**
les couches de finition (10) sont repliées respectivement les unes sur les autres sur les côtés des panneaux (20) reliés les uns aux autres.

6. Paroi latérale ou toit selon la revendication 4 ou 5,
**caractérisée en ce que**
les couches de finition (10) sont repliées vers l'intérieur au niveau du bord de la couche de structure (9) sur les côtés des panneaux (20) reliés les uns aux autres.

7. Paroi latérale ou toit selon une des revendications de 4 à 6,
**caractérisée en ce que**
les bords repliés vers l'intérieur (24) des couches de finition (10) en direction de l'âme centrale (7) se raccordent de façon sensiblement affleurée à une couche de structure (9).

8. Paroi latérale ou toit selon une des revendications de 1 à 7,
**caractérisée en ce que**
la couche de structure (9) présente au moins une couche en matière synthétique renforcée par fibres (14, 15, 16), de préférence plusieurs couche en matière synthétique renforcée par fibres (14, 15,16).

9. Paroi latérale ou toit selon la revendication 8,
**caractérisée en ce que**
l'on forme la matrice d'au moins une couche en matière synthétique renforcée par fibres (14, 15, 16) à partir d'un thermoplastique, en particulier d'un polypropylène.

10. Paroi latérale ou toit selon la revendications 8 ou 9,
**caractérisée en ce que**
les fibres d'au moins deux couches en matière synthétique renforcée par fibres (14, 15, 16) présentent une direction préférentielle et que les directions préférentielles sont dirigées perpendiculairement l'une par rapport à l'autre.

11. Paroi latérale ou toit selon une des revendications de 1 à 10,
**caractérisée en ce que**
la couche métallique (18) de la couche de finition (10) est fabriquée en aluminium et/ou les couches de finition (10) portent sur leurs cotés extérieurs respectivement au moins une couche de vernis (19) et/ou au moins une couche en matière synthétique.

12. Paroi latérale ou toit selon une des revendications de 1 à 11,
**caractérisée en ce que**
les panneaux (20) sont reliés les uns aux autres par l'intermédiaire de liaisons entre les couches de structure (9) et/ou les couches de finition (10) des panneaux (20) ainsi que par un élément de liaison recouvrant les bords des panneaux reliés, de préférence en forme d'une bande de liaison (25) et que, de préférence, les liaisons sont des liaisons adhésives et/ou des liaisons soudées.

13. Paroi latérale ou toit selon une des revendications de 1 à 12,
**caractérisée en ce que**
l'on prévoit, entre l'âme centrale (7) et la couche de structure (9), une couche intermédiaire (8), et que le côté de la couche intermédiaire (8) adjacent à l'âme centrale (7) présente une affinité avec le matériau adjacent de l'âme centrale (7) et que le côté de la couche intermédiaire (8) adjacent à la couche de structure (9) présente une affinité avec le matériau adjacent de la couche de structure (9).

14. Paroi latérale ou toit selon la revendication 13,
**caractérisé en ce que**
l'âme centrale (7) est reliée par liaison de forme avec la couche intermédiaire (8), la couche intermédiaire (8) est reliée par liaison de forme avec la couche de structure (9) et/ou la couche de structure (9) est reliée par liaison de forme avec la couche de finition (10), de préférence par l'intermédiaire d'une couche de promoteur d'adhérence (11, 12, 17).

15. Paroi latérale ou toit selon la revendication 13 ou 14,
**caractérisé en ce que**
la couche intermédiaire (8) présente une couche en matière synthétique, une couche en matière synthétique présentant du métal et/ou une couche métallique (13), de préférence en aluminium.
